# EUROPEAN PATENT APPLICATION

(11) **EP 4 819 270 A2**
(43) Date of publication of application: **07.10.2026**
(21) Application number: 26198153.4
(22) Date of filing: 11.07.2023
(51) Int. Cl.: H01M 10/04

(54) **PRISMATIC SECONDARY BATTERY HAVING IMPROVED SAFETY**

(30) Priority: 11.07.2022 KR 20220085230
(62) Document number(s) of the earlier application(s) in accordance with Art. 76 EPC: 23839924.0 / 4 376 179
(71) Applicant: LG Energy Solution, Ltd., Seoul 07335 (KR)
(72) Inventor: BOK, Cheon Hee, 34122 Daejeon (KR); SUNG, Joo Hwan, 34122 Daejeon (KR)
(74) Representative: Goddar, Heinz J.

(57) **Abstract**

Disclosed herein relates to a prismatic secondary battery, which in one example includes a case having an open surface formed on at least one surface thereof, an electrode assembly housed within the case, a cap plate sealing the open surface of the case, and having electrode terminals of a positive electrode and a negative electrode, and a concave first beading part formed on at least two sides opposite to each other along a front, rear, left and right perimeter of the case.

## Description

### TECHNICAL FIELD

The present disclosure relates to a prismatic secondary battery with improved safety by preventing internal slippage of an electrode assembly.

This application claims the benefit of priority to Korean Patent Application No. 10-2022-0085230, filed on July 11, 2022, and entire contents of the Korean patent application are incorporated herein by reference.

### BACKGROUND

Unlike primary batteries, secondary batteries are rechargeable and have been extensively researched and developed recently due to potential for miniaturization and high capacity applications. With the increasing technological advancements and demand for mobile devices, as well as the growing prominence of electric vehicles and energy storage systems in response to environmental concerns, the demand for secondary batteries as an energy source is rapidly increasing.

Depending on the shape of the battery case, secondary batteries are classified into coin-type batteries, cylindrical batteries, prismatic batteries, and pouch-type batteries. An electrode assembly, which is installed inside the battery case in secondary batteries, is a power generation element capable of charge and discharge. It has a laminated structure of electrodes and separators.

Electrode assemblies can be broadly categorized into: a Jellyroll type, which involves winding a positive electrode and a negative electrode of an active material-coated sheet with a separator interposed therebetween; a stack type, where a plurality of positive electrodes and negative electrodes are sequentially stacked with a separator interposed therebetween; and a Stack & Folding type, where unit cells of a stack type are wound with a long separator film.

The positive and negative electrode tabs of the electrode assembly housed in the prismatic secondary battery are bonded to the electrode leads and connected to the positive and negative electrode terminals on the case, respectively. In the case accommodating the electrode assembly, there is an extra space formed for a space for an electrical connection of the electrode assembly and the required amount of electrolyte. Therefore, the electrode assembly in the case is subject to shaking or slipping (slip phenomenon) due to external impacts. In particular, prismatic secondary batteries used in hybrid and electric vehicles are subject to frequent slip phenomena due to impacts during driving.

The structural support of the electrode assembly is primarily provided by the positive and negative electrode tabs (electrode tabs) connected to the positive and negative electrode terminals. Because of this, any slippage in the electrode assembly can cause various problems, such as short circuits due to an electrical contact, or tearing of the tabs due to stress concentration on the electrode tabs. In addition, damage to the tabs can also reduce the capacity of the secondary battery or cause an imbalance between a plurality of batteries stored in the battery pack, which can eventually reduce battery life and cause reliability issues.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

### TECHNICAL PROBLEM

An object of the present disclosure is to suppress an electrode assembly housed inside a prismatic secondary battery from causing slippage during use.

However, the technical problems that the present disclosure seeks to address are not limited to those described above, and other problems not mentioned will be apparent to those of ordinary skill in the art from the following description of the invention.

### TECHNICAL SOLUTION

The present disclosure relates to an prismatic secondary battery, which, in one example, includes a case having an open surface formed on at least one surface thereof; an electrode assembly housed within the case; a cap plate sealing the open surface of the case, and having electrode terminals of a positive electrode and a negative electrode; and a concave first beading part formed on at least two sides opposite to each other along a front, rear, left and right perimeter of the case.

The first beading part may compress a surface of the electrode assembly housed within the case.

In particular, the first beading part may compress a surface of the negative electrode of the electrode assembly housed within the case, and in the electrode assembly, the surface of the negative electrode covers a surface of the positive electrode.

In addition, the first beading part may be formed at a location spaced apart from electrode tabs of the electrode assembly housed within the case.

In addition, the first beading part may be formed adjacent to the cap plate to compress an upper part of the electrode assembly housed within the case.

In an exemplary embodiment of the present disclosure, the first beading part may be formed at front and rear surfaces of the case, which have a longest length in a width direction, among the front, rear, left and right perimeter of the case.

Alternatively, the first beading part may be formed continuously on four sides along the front, rear, left and right perimeter of the case.

According to another exemplary embodiment of the present disclosure, the prismatic secondary battery may further include a second beading part formed on at least two sides opposite to each other along the front, rear, left and right perimeter at a height adjacent to a lower side of the case.

The second beading part may support a lower part of the electrode assembly housed within the case, and the second beading part may contact and support the lower part of the electrode assembly without compressing the surface of the electrode assembly housed within the case.

Additionally, the second beading part may be formed at front and rear surfaces of the case, which have a longest length in a width direction among the front, rear, left and right perimeters of the case, or may be formed continuously four sides along the front, rear, left and right perimeter of the case.

Alternatively, the second beading part may be formed continuously on four sides along the front, rear, left and right perimeter of the case.

### ADVANTAGEOUS EFFECTS

The prismatic secondary battery of the present disclosure with the above configuration has a concave beading part formed on the case to press and fix the surface of the electrode assembly, thereby improving the support structure of the electrode assembly and suppressing the slip phenomenon during use, thereby preventing various problems such as shorts and tabs tearing due to electrical contact, which greatly improves the safety of the secondary battery.

However, the technical effects of the present disclosure are not limited to those described above, and other effects not mentioned will be apparent to one of ordinary skill in the art from the following description of the invention.

### BRIEF DESCRIPTION OF THE DRAWINGS

The following drawings accompanying this specification illustrate preferred exemplary embodiments of the present disclosure and are intended to serve as a further understanding of the technical ideas of the present disclosure in conjunction with the detailed description of the invention that follows, so the present disclosure is not to be construed as limited to what is shown in such drawings.
FIG. 1 is a diagram illustrating the outer shape of a prismatic secondary battery according to an exemplary embodiment of the present disclosure.
FIG. 2 is a cross-sectional view of the prismatic secondary battery of FIG. 1 incised along line "A-A".
FIG. 3 is a diagram illustrating the front of a prismatic secondary battery.
FIG. 4 is a diagram illustrating another exemplary embodiment of the first beading part.
FIG. 5 is a diagram illustrating the outer shape of a prismatic secondary battery according to another exemplary embodiment of the present disclosure.
FIG. 6 is a cross-sectional view of the prismatic secondary battery of FIG. 5 incised along line "B-B".
FIG. 7 is a diagram illustrating another exemplary embodiment of the second beading part.

### DETAILED DESCRIPTION

The present disclosure may have various modifications and various examples, and specific examples are illustrated in the drawings and described in detail in the description.

However, it should be understood that the present disclosure is not limited to specific embodiments, and includes all modifications, equivalents or alternatives within the spirit and technical scope of the present disclosure.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure relates to a prismatic secondary battery, which in one example includes a case where at least one side forms an open surface, an electrode assembly housed within the case through the open surface of the case, and a cap plate coupled to seal the open surface of the case, and having electrode terminals of a positive electrode and a negative electrode, wherein a concave first beading part is formed on at least two sides opposite to each other along a front, rear, left and right perimeter of the case.

Here, a first beading part formed as a recess toward the interior of the case presses against the surface of an electrode assembly housed within the case.

### EXAMPLES FOR CARRYING OUT THE INVENTION

As such, in the prismatic secondary battery of the present disclosure, the concave beading part formed on the case presses and fixes the surface of the electrode assembly, thereby improving the support structure of the electrode assembly and suppressing the slip phenomenon during use, thereby preventing various problems such as short or tearing of the tabs due to electrical contact, which greatly improves the safety of the secondary battery.

Hereinafter, specific embodiments of the present disclosure will be described in detail with reference to the accompanying drawings. For reference, the directions of front, back, up, down, left, and right used in the following description to designate relative positions are intended to aid in the understanding of the invention, and refer to the directions shown in the drawings unless otherwise specified.

### [FIRST EMBODIMENT]

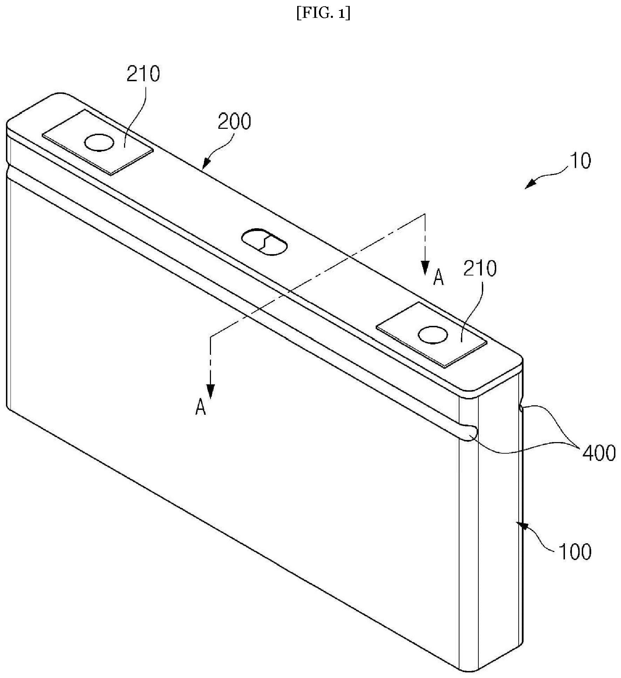

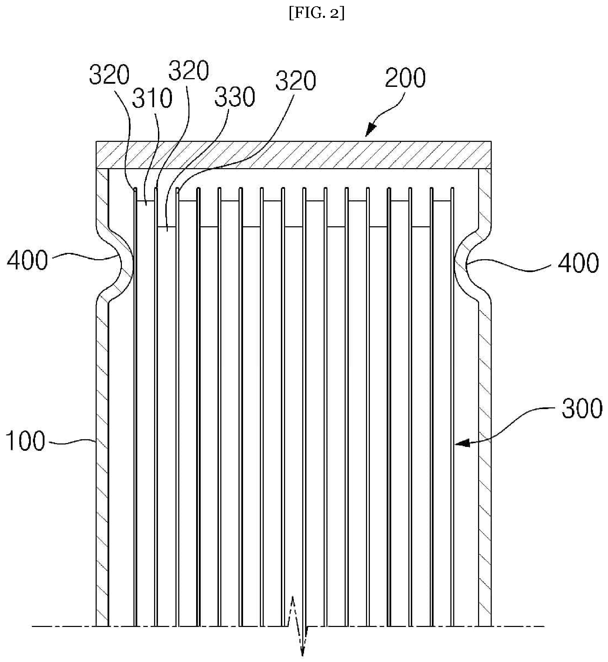

FIG. 1 is a diagram illustrating the outer shape of a prismatic secondary battery 10 according to a first embodiment of the present disclosure, and FIG. 2 is a cross-sectional view of the prismatic secondary battery 10 of FIG. 1 cut along the line "A-A".

The prismatic secondary battery 10 in the first embodiment includes a case 100 having at least one side forming an open surface, and an electrode assembly 300 housed within the case 100 through the open surface of the case 100. In addition, the case 100 includes a cap plate 200 that is coupled to seal the open surface of the case 100 and has positive and negative electrode terminals 210.

The prismatic secondary battery 10 of the first embodiment shown in FIG. 1 is a unidirectional secondary battery in which the electrode terminals 210 of the positive electrode and the negative electrode are disposed together on an upper surface of the case 100, and the open surface of the case 100 is an upper surface, and the cap plate 200 is accordingly seals the upper surface of the case 100.

The electrode assembly 300 with the unit cells stacked is hermetically sealed within the case 100. A unit cell is a cell comprising a unit structure of negative electrode 310/separator 320/positive electrode 330, wherein a plurality of unit cells is stacked to form a single electrode assembly 300. A typical configuration of a unit cell is described below.

The positive electrode 330 includes a positive electrode current collector and a positive electrode active material applied to one or both sides of the positive electrode current collector. At one end of the positive electrode current collector in the width direction, there is a non-coated part to which no positive electrode active material is applied. A positive electrode tab 344 is formed by performing a notching (punching) processing on the non-coated part.

The negative electrode 310 includes a negative electrode current collector and a negative electrode active material applied to one or both sides of the negative electrode current collector. At one end of the negative electrode current collector in the width direction, there is a non-coated part to which no negative electrode active material is applied. Similarly, the non-coated part of the negative electrode 310 functions as a negative electrode tab 342.

In the first embodiment, the electrode tabs 340, namely the positive electrode tab 344 and the negative electrode tab 342, are located at the same end along the width direction of the electrode assembly 300, namely the height direction of the prismatic secondary battery 10. In the example shown, the positive electrode tab 344 and the negative electrode tab 342 extend toward the upper surface of the prismatic secondary battery 10, and the positive electrode tab 344 and the negative electrode tab 342 are electrically connected to the positive and negative terminals provided on the cap plate 200, respectively.

In the present disclosure, the positive electrode active material coated on the positive electrode current collector and the negative electrode active material coated on the negative electrode current collector can be any active material known in the art.

In one example, the positive electrode active material may include an alkali metal compound having the general chemical formula A[AxMy]O2+z (where A includes at least one element selected from Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, 0.1 ≤ z ≤ 2; wherein x, y, z, and the stoichiometric coefficients of the components included in M are selected such that the compound remains electrically neutral).

In another example, the positive electrode active material may be an alkali metal compound xLiM1O2-(1-x)Li2M2O3 (where M1 includes at least one element having an average oxidation state of 3; M2 includes at least one element having an average oxidation state of 4; 0≤ x ≤1) as disclosed in US6,677,082, US6,680,143, and others.

In another example, the positive electrode active material may be a lithium metal phosphate represented by the general chemical formula LiaM1xFe1-xM2yP1-yM3zO4-z (where M1 includes at least one element selected from Ti, Si, Mn, Co, Fe, V, Cr, Mo, Ni, Nd, Mg, and Al; M2 includes at least one element selected from Ti, Si, Mn, Co, Fe, V, Cr, Mo, Ni, Nd, Mg, Al, As, Sb, Si, Ge, V, and S; and M3 includes a halogenated element optionally including F; 0 < a ≤ 2, 0 ≤ x ≤ 1, 0 ≤ y < 1, 0 ≤ z < 1; and the stoichiometric coefficients of the components included in a, x, y, z, M1, M2, and M3 are selected such that the compound is electrically neutral), or a lithium metal phosphate represented by Li3M2(PO4)3 [where M includes at least one element selected from Ti, Si, Mn, Fe, Co, V, Cr, Mo, Ni, Mg, and Al].

Preferably, the positive electrode active material may include primary particles and/or secondary particles in which the primary particles are agglomerated.

In one example, the negative electrode active material can be a carbon material, lithium metal or lithium metal compound, silicon or silicon compound, tin or tin compound, or the like. Metal oxides such as TiO2 and SnO2 with a potential of less than 2V can also be used as negative electrode active materials. Both low and high crystalline carbon can be used as carbon materials.

In addition, the separator 320 interposed between the positive electrode 330 and the negative electrode 310 can be a porous polymeric film, for example, a porous polymeric film made from a polyolefin-based polymer, such as an ethylene homopolymer, a propylene homopolymer, an ethylene/butene copolymer, an ethylene/hexene copolymer, an ethylene/methacrylate copolymer, or the like, either alone or laminated therewith. As another example, the separator 320 may use a conventional porous nonwoven fabric, such as a nonwoven fabric made of high melting point glass fibers, polyethylene terephthalate fibers, or the like.

At least one surface of the separator 320 can include a coating layer of inorganic particles. It is also possible that the separator 320 itself is made of a coating layer of inorganic particles. The particles comprising the coating layer may have a structure combined with a binder such that an interstitial volume exists between adjacent particles.

The inorganic particles may include inorganic materials having a dielectric constant of 5 or greater. As a non-limiting example, the inorganic particles may include at least one material selected from the group consisting of Pb(Zr,Ti)O3(PZT), Pb1-xLaxZr1-yTiyO3(PLZT), PB(Mg3Nb2/3)O3-PbTiO3(PMN-PT), BaTiO3, hafnia(HfO2), SrTiO3, TiO2, Al2O3, ZrO2, SnO2, CeO2, MgO, CaO, ZnO, and Y2O3.

In addition, the electrolyte comprising the electrolyte in which the electrode assembly 300 is impregnated may be a salt having a structure such as A+B-. Here, A+ includes ions consisting of alkali metal cations such as Li+, Na+, K+, or combinations thereof. And B-includes one or more anions selected from the group consisting of F-, Cl-, Br-, I-, NO3-, N(CN)2-, BF4-, ClO4-, AlO4-, AlCl4-, PF6-, SbF6-, AsF6-, BF2C2O4-, BC4O8-, (CF3)2PF4-, (CF3)3PF3-, (CF3)4PF2-, (CF3)5PF-, (CF3)6P-, CF3SO3-, C4F9SO3-, CF3CF2SO3-, (CF3SO2)2N-, (FSO2)2N-, CF3CF2(CF3)2CO-, (CF3SO2)2CH-, (SF5)3C-, (CF3SO2)3C-, CF3(CF2)7SO3-, CF3CO2-, CH3CO2-, SCN-, and (CF3CF2SO2)2N-.

The electrolyte can also be dissolved in organic solvents. As the organic solvent, propylene carbonate (PC), ethylenecarbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone), or mixtures thereof may be used.

Returning to FIGS. 1 and 2, the prismatic secondary battery 10 of the present disclosure has a concave first beading part 400 formed on at least two sides opposite to each other along the front, rear, right and left perimeter of the case 100. The first beading part 400 forms a concave surface in the form of a thin line, and the first beading part 400, which forms a concave surface toward the interior of the case 100, has a depth that compresses the surface of the electrode assembly 300 housed inside the case 100.

Because the first beading part 400 is in the form of a thin line, even if it forms a concave surface inwardly in the case 100, it has a very small effect on the capacity of the prismatic secondary battery. In other words, the first beading part 400 has a very limited effect on the capacity or size of the essential components of the prismatic secondary battery 10 that are housed inside the case, such as the electrode assembly 300 and/or the electrolyte.

As shown in FIG. 2, the first beading part 400 formed over at least two surfaces opposite each other along the front, rear, left and right perimeter of the case 100 presses the surface of the electrode assembly 300 in two opposite directions. That is, the electrode assembly 300 having a looseness with respect to the case 100 is pressed and fixed in both directions by the opposing first beading part 400, and the slip phenomenon during use is suppressed by improving the support structure of the electrode assembly 300. As a result, the fluidity of the electrode assembly 300 is restricted by the first beading part 400, thereby preventing various problems such as short or tearing of the tabs due to electrical contact, thereby greatly improving the safety of the prismatic secondary battery 10.

Additionally, the first beading part 400 may compress the negative electrode 310 surface of the electrode assembly 300 housed inside the case 100, wherein the negative electrode 310 is formed larger than the positive electrode 330 such that the negative electrode 310 surface covers the positive electrode 330 surface. That is, the negative electrode 310 surface covers the positive electrode 330 surface so that it is not exposed.

In the electrode assembly 300, forming the negative electrode 310 larger than the positive electrode 330 is advantageous from a safety perspective. This considers the N/P ratio, which is the ratio of the capacity of the negative electrode 310 to the positive electrode 330. In a lithium-ion secondary battery using a graphite negative electrode, the capacity of the negative electrode 310 must be larger than the positive electrode 330 to prevent lithium precipitation from the negative electrode 310 when overcharged.

In this respect, it may be desirable to maintain the N/P ratio at a level of approximately 1.12 in consideration of the safety of the secondary battery, and accordingly, the electrode assembly 300 may be formed such that the negative electrode 310 is larger than the positive electrode 330. It may also be desirable to let the side that is directly pressed by the first beading part 400 be the negative electrode 310, since the negative electrode active material has a higher structural stability compared to the positive electrode active material.

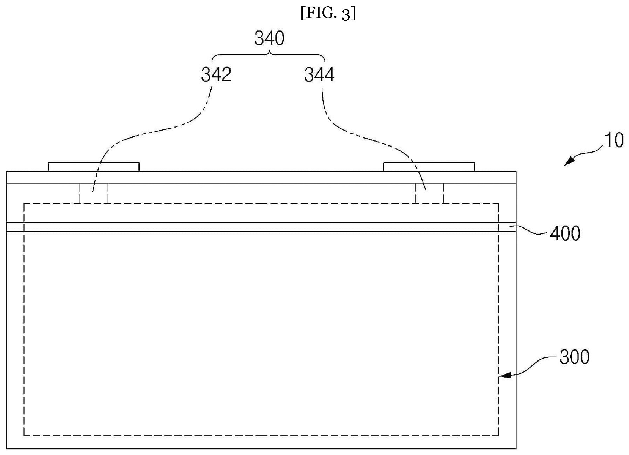

FIG. 3 is a front view of the prismatic secondary battery 10, with the electrode assembly 300 housed within the case 100 represented by a dotted line. The first beading part 400 presses against the surface of the negative electrode 310, where the first beading negative electrode 400 is formed at a position spaced apart from the electrode tabs 340 of the electrode assembly 300.

When the first beading part 400 compresses the surface of the negative electrode 310 of the electrode assembly 300, it may support a coated part applied with a negative electrode active material, or a non-coated part without a negative electrode active material applied. If the first beading part 400 is compressing the negative electrode non-coated part, it is preferable to support the downward side at some distance from the negative electrode tab 342 formed by performing a notching processing on the negative electrode non-coated part. That is, it is because creating stress on the electrode tab 340 by the first beading part 400 directly compressing the electrode tab 340, especially the negative electrode tab 342, may damage the electrode tab 340.

Additionally, the first beading part 400 may be formed adjacent to the cap plate 200 that forms the upper surface of the case 100 to compress the upper part of the electrode assembly 300 housed within the case 100.

And, as shown in FIG. 1, the first beading part 400 may be formed on two sides, which have the longest length in the width direction among the front, left, and right perimeters of the case 100, that is, the front and rear of the case 100 with respect to the drawing. This allows the first beading part 400 to be formed to a sufficient length to firmly support the electrode assembly 300.

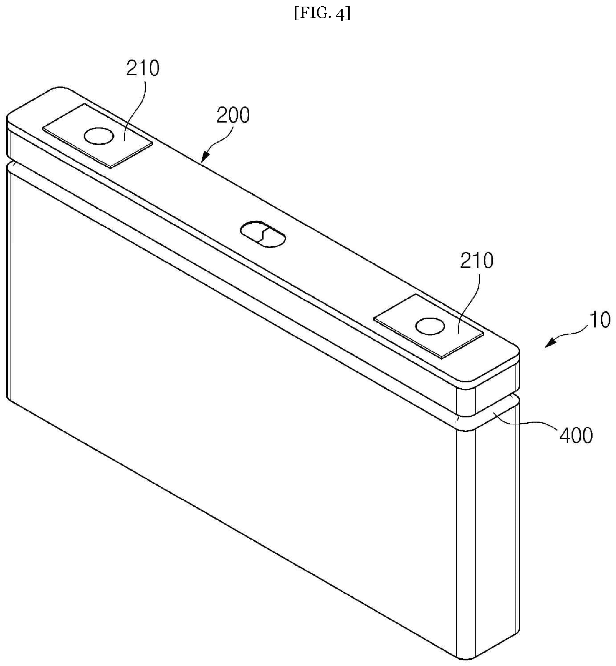

Alternatively, as shown in FIG. 4, the first beading part 400 may be formed continuously on all four sides along the front, back, left, and right perimeters of the case 100 to more securely compress and support the electrode assembly 300 as it compresses the electrode assembly 300 from all sides.

### [SECOND EMBODIMENT]

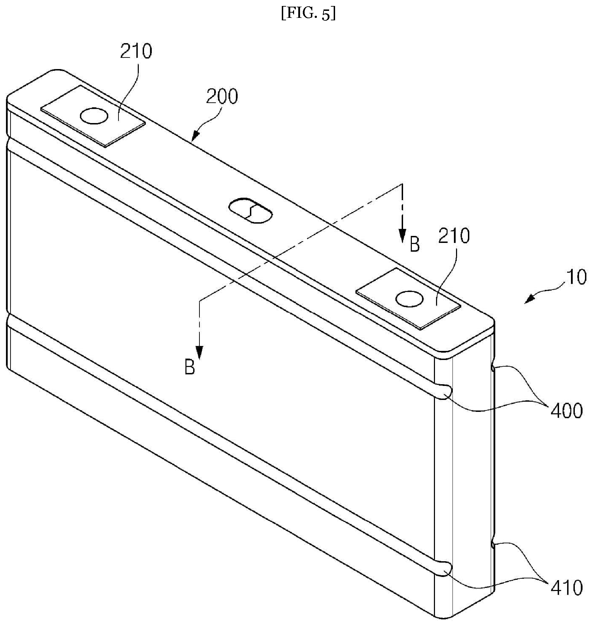

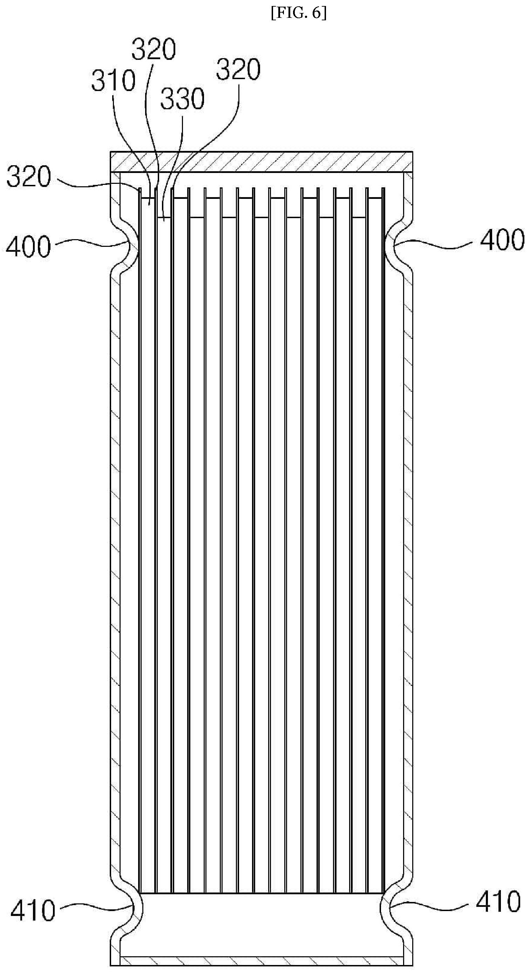

FIG. 5 is a diagram illustrating the outer shape of the prismatic secondary battery 10 according to a second embodiment of the present disclosure, and FIG. 6 is a cross-sectional view of the prismatic secondary battery 10 of FIG. 5 cut along the line "B-B".

As shown in FIGS. 5 and 6, according to the second embodiment of the present disclosure, a second beading part 410 formed on at least two surfaces opposite to each other along the front, back, left, and right perimeters at a height adjacent to the lower side of the case 100 is further included.

The second beading part 410 is a configuration that is added to assist the first beading part 400 described in the first embodiment to further prevent the electrode assembly 300 from slipping. The first beading part 400 supports the upper part of the electrode assembly 300 by compressing, while the second beading part 410 supports the lower part of the electrode assembly 300.

In the cross-sectional view of FIG. 6, the second beading part 410 contacts and supports the lower part of the electrode assembly 300 without compressing the surface of the electrode assembly 300 housed inside the case 100. In other words, the second beading part 410 does not directly compress the electrode assembly 300, but serves to support the lower part to prevent the electrode assembly 300 from moving downwardly.

In the second embodiment, the second beading part 410 supports the lower part of the electrode assembly 300 while the first beading part 400 presses and fixes the upper part of the electrode assembly 300, so that the slip phenomenon of the electrode assembly 300 is almost eliminated.

Here, not forming the second beading part 410 into a structure that directly presses the electrode assembly 300 may cause unintended deformation of the electrode assembly 300 in the process of fixing both the upper and lower parts of the electrode assembly 300, and may be disadvantageous in the impregnation of the electrolyte. In addition, it is considered that the second beading part 410 may act as an obstacle in accommodating the deformation of the electrode assembly 300 if a swelling phenomenon occurs in the electrode assembly 300 due to repeated charging and discharging of the prismatic secondary battery 10.

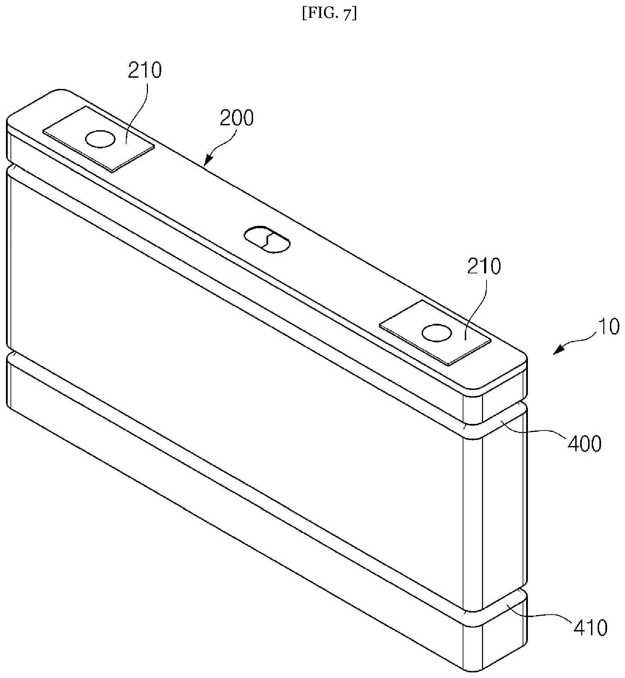

And, as in the case of the first beading part 400, the second beading part 410 may be formed on the front and rear, which has the longest length in the width direction among the front, rear, left and right perimeters of the case 100, or may be formed continuously on all four sides along the front, rear, left and right perimeters of the case 100. FIG. 5 illustrates an embodiment in which the second beading part 410 is formed on the front and rear of the case 100, respectively, and FIG. 7 illustrates an embodiment in which the second beading part 410 is formed continuously on all four sides along the front, rear, left and right perimeters of the case 100.

The present disclosure has been described above in more detail through the drawings and embodiments. However, the configurations described in the drawings or the embodiments in the specification are merely embodiments of the present disclosure and do not represent all the technical ideas of the present disclosure. Thus, it is to be understood that there may be various equivalents and variations in place of them at the time of filing the present application.

### REFERENCE NUMERALS

- 10: PRISMATIC SECONDARY BATTERY
- 100: CASE
- 200: CAP PLATE
- 210: ELECTRODE TERMINAL
- 300: ELECTRODE ASSEMBLY
- 310: NEGATIVE ELECTRODE
- 320: SEPARATOR
- 330: POSITIVE ELECTRODE
- 340: ELECTRODE TAB
- 342: NEGATIVE ELECTRODE TAB
- 344: POSITIVE ELECTRODE TAB
- 400: FIRST BEADING PART
- 410: SECOND BEADING PART
In view of the foregoing disclosure, the present invention may be implemented in accordance with the following itemized embodiment examples.
Item 1 A prismatic secondary battery, comprising:
   a case having an open surface formed on at least one surface thereof;
   an electrode assembly housed within the case;
   a cap plate sealing the open surface of the case, and having electrode terminals of a positive electrode and a negative electrode; and
   a concave first beading part formed on at least two sides opposite to each other along a front, rear, left and right perimeter of the case.
Item 2 The prismatic secondary battery of claim 1, wherein the first beading part compresses a surface of the electrode assembly housed within the case.
Item 3 The prismatic secondary battery of item 2, wherein the first beading part compresses a surface of the negative electrode of the electrode assembly housed within the case.
Item 4 The prismatic secondary battery of item 3, wherein in the electrode assembly, the surface of the negative electrode covers a surface of the positive electrode.
Item 5 The prismatic secondary battery of item 3, wherein the first beading part is formed at a location spaced apart from electrode tabs of the electrode assembly housed within the case.
Item 6 The prismatic secondary battery of item 5, wherein the first beading part is formed adjacent to the cap plate to compress an upper part of the electrode assembly housed within the case.
Item 7 The prismatic secondary battery of item 1, wherein the first beading part is formed at front and rear surfaces of the case, which have a longest length in a width direction among the front, rear, left and right perimeters of the case.
Item 8 The prismatic secondary battery of item 1, wherein the first beading part is formed continuously on four sides along the front, rear, left and right perimeter of the case.
Item 9 The prismatic secondary battery of item 6, further comprising:
   a second beading part formed on at least two sides opposite to each other along the front, rear, left and right perimeter at a height adjacent to a lower side of the case.
Item 10 The prismatic secondary battery of item 9, wherein the second beading part supports a lower part of the electrode assembly housed within the case.
Item 11 The prismatic secondary battery of item 10, wherein the second beading part contacts and supports the lower part of the electrode assembly without compressing the surface of the electrode assembly housed within the case.
Item 12 The prismatic secondary battery of item 9, wherein the second beading part is formed at front and rear surfaces of the case, which have a longest length in a width direction, among the front, rear, left and right perimeter of the case.
Item 13 The prismatic secondary battery of item 9, wherein the second beading part is formed continuously on four sides along the front, rear, left and right perimeter of the case.

## Claims

1. A prismatic secondary battery (10), comprising:
a case (100) having an open surface formed on an upper surface thereof;
an electrode assembly (300) housed within the case (100);
a cap plate (200) sealing the open surface of the case (100);
a second beading part (410) formed along the front, rear, left and right perimeter on at least two sides opposite to each other at a height adjacent to a lower side of the case (100).

2. The prismatic secondary battery (10) of claim 1, wherein the second beading part (410) supports a lower part of the electrode assembly (300) housed within the case (100).

3. The prismatic secondary battery (10) of claim 2, wherein the second beading part (410) contacts and supports the lower part of the electrode assembly (300) without compressing the surface of the electrode assembly (300) housed within the case (100).

4. The prismatic secondary battery (10) of any one of the preceding claims, wherein the second beading part (410) is formed at front and rear surfaces of the case (100), which have a longest length in a width direction, among the front, rear, left and right perimeter of the case (100).

5. The prismatic secondary battery (10) of any one of the preceding claims, wherein the second beading part (410) is formed continuously on four sides along the front, rear, left and right perimeter of the case (100).

6. The prismatic secondary battery (10) of any one of the preceding claims, a concave first beading part(400) formed on at least two sides opposite to each other along a front, rear, left and right perimeter of the case(100), the first beading part(400), being formed adjacent to the cap plate (200) to compress an upper part of the electrode assembly (300) housed within the case (100).

7. The prismatic secondary battery (10) of claim 6, wherein the first beading part (400) compresses a surface of the negative electrode (310) of the electrode assembly (300) housed within the case (100).

8. The prismatic secondary battery (10) of claim 7, wherein in the electrode assembly (300), the surface of the negative electrode (310) covers a surface of the positive electrode (330).

9. The prismatic secondary battery (10) of claim 7 or 8, wherein the first beading part (400) is formed at a location spaced apart from electrode tabs (340) of the electrode assembly (300) housed within the case (100).

10. The prismatic secondary battery (10) of any one of claims 6 to 9, wherein the first beading part (400) is formed at front and rear surfaces of the case (100), which have a longest length in a width direction among the front, rear, left and right perimeters of the case (100).

11. The prismatic secondary battery (10) of any one of claim 6 to 10, wherein the first beading part (400) is formed continuously on four sides along the front, rear, left and right perimeter of the case (100).
